# EUROPEAN PATENT APPLICATION

(11) **EP 3 349 519 A1**
(43) Date of publication of application: **18.07.2018**
(21) Application number: 18155709.1
(22) Date of filing: 17.11.2010
(51) Int. Cl.: H04W 64/00

(54) **NETWORK-BASED POSITIONING MECHANISM AND REFERENCE SIGNAL DESIGN IN OFDMA SYSTEMS**

(30) Priority: 17.11.2009 US 261826 P; 09.02.2010 US 302618 P; 18.06.2010 US 356095 P; 16.11.2010 US 927458
(62) Divisional of application: 10831135.8
(71) Applicant: MediaTek Inc., Hsin-chu 300 (TW)
(72) Inventor: HWANG, Chien-Hwa, 302 Hsinchu County (TW); LIAO, Pei-Kai, 551 Nantou County (TW); CHEN, Yih-Shen, 300 Hsinchu City (TW)
(74) Representative: 2K Patentanwälte Blasberg Kewitz & Reichel

(57) **Abstract**

A network-based positioning mechanism is proposed. A serving BS first allocates radio resource to a target UE for network-based positioning in a wireless communication system. The target UE then transmits a positioning reference signal (PRS) to the serving BS and a plurality of cooperative BSs at the same time instant. All the cooperative BSs then conduct PRS detection and TOA measurements. Finally, the serving BS conducts positioning estimation based on the TOA measurement results. In one novel aspect, only one PRS transmission is required in one positioning opportunity for one positioning result. Candidates of PRS are selected with respect to different scenarios and allocated in a PRS resource region. Multiple positioning opportunities and multiple reference signals may be multiplexed over time, frequency or code domain in the PRS resource region. In one embodiment, the PRS is configured in such a way that both radio resource consumption and interference is minimized.

## Description

### BACKGROUND OF THE INVENTION

### Cross Reference To Related Applications

This application claims priority under 35 U.S.C. §119 from U.S. Provisional Application Number 61/261,826, entitled "Enhanced Network-Based Positioning Mechanism and Reference Signal Design for Location-Based Service in OFDMA Systems and Resource Mapping for A-MAP-IE in Advanced Wireless OFDMA systems," filed on November 17, 2009; U.S. Provisional Application Number 61/302,618, entitled "Non-Dedicated Schemes for Network-Based Positioning in OFDMA Systems," filed on February 9, 2010; U.S. Provisional Application Number 61/356,095, entitled "Candidates of Reference Signals and Some Designs for Network-Based Positioning," filed on June 18, 2010;the subject matter of which is incorporated herein by reference.

### Field of the Invention

The disclosed embodiments relate generally to wireless network communications, and, more particularly, to network-based positioning mechanism and reference signal design in orthogonal frequency division multiple access (OFDMA) systems.

### Description of the Related Art

In wireless or mobile communication networks, a positioning service is a function that supports or assists the calculation of the geographic position of a user equipment (UE). The Federal Communications Commission (FCC) of the United States of America has made several requirements applicable to positioning services provided in wireless or mobile telephones. For Basic 911 service, all 911 calls must be relayed to a call center, regardless of whether the mobile phone user is a customer of the network being used. For Enhanced 911 (E-911) phase 1 service, wireless network operators must identify the phone number and cell phone tower used by callers within six minutes of a request by a public safety answering point (PSAP). For E-911 Phase 2 service, 95% of in-service phones of a network operator must be E911 compliant ("location capable") by December 31, 2005. In addition, wireless network operators must provide the latitude and longitude of callers within 300 meters.

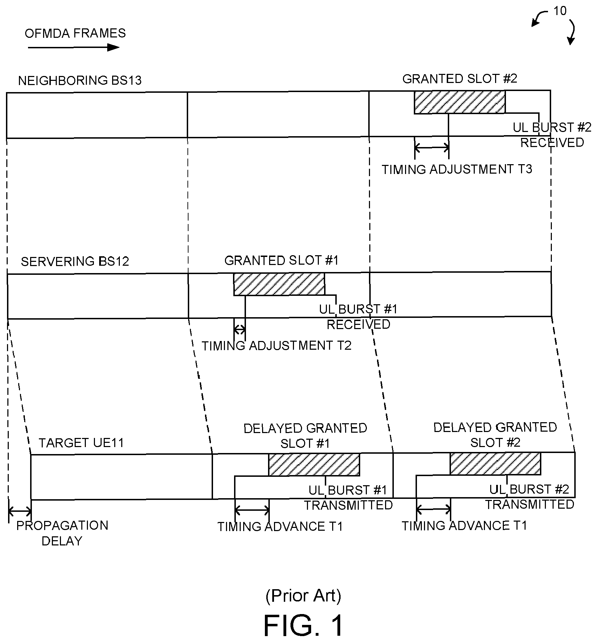

Figure 1 (Prior Art) is a diagram that illustrates a network-based positioning mechanism adopted by an IEEE 802.16e wireless communication system 10. For network-based positioning, the calculation of UE position is done by the network, i.e., by a node at the network side such as a base station or a mobile location center. To perform positioning calculation by a network node, some measurements may be required to estimate the location information, e.g., estimating the time of arrival (TOA) of a reference signal by measuring the reference signal, and then computing the time difference of arrival (TDOA) based on the TOA of the reference signal. In the example of Figure 1, a target UE11 (i.e., mobile station) transmits ranging signals to its serving BS12 and a neighboring BS13 sequentially. That is, target UE11 first transmits a ranging signal to the serving BS12 in UL burst #1 using granted slot #1 with timing advance T1, and then transmits another ranging signal to the neighboring BS13 in UL burst #2 using granted slot #2 with the same timing advance T1. Timing advance T1 is the estimated propagation delay between target UE11 and its serving BS12. Due to the estimation error of timing advance T1, the received UL burst #1 has a timing adjustment T2 with respect to the granted slot #1, and the received UL burst #2 has a timing adjustment T3 with respect to the granted slot #2. Based on the received UL burst #1 and #2, BS12 and BS13 conduct TOA measurements for network-based positioning. Ideally, one serving BS and at least two neighboring BSs would participate in a network-based positioning, resulting in at least three ranging signal transmissions for one positioning result. If more BSs participate in the positioning, then more ranging signal transmissions are required for one positioning result.

The above-illustrated mechanism for uplink TDOA/TOA location-based service (LBS) has several problems for the next generation 4G communication systems. First, it takes multiple ranging signal transmissions in each TOA measurement. This consumes mobile station's power and system bandwidth without improving estimation performance. Second, in each ranging signal transmission to one base station, the base station suffers interference from its neighboring base stations while receiving the ranging signal for TOA measurement. As a result, positioning accuracy may likely fail to meet the E-911 requirements without interference management. Third, radio resources consumed for network-based positioning service should be as less as possible for a given positioning accuracy requirement. Therefore, an enhanced network-based positioning scheme is desired in 4G systems to meet the E-911 requirements. In addition, the selected positioning reference signal (PRS) should be configured in such a way that both the consumed radio resources and interference level are as less as possible.

### BRIEF SUMMARY OF THE INVENTION

A network-based positioning mechanism is proposed. In a wireless communication system, a target UE is located in a positioning serving cell served by a serving BS. The serving BS selects a set of cooperative BSs, each serves a positioning neighbor cell. The positioning serving cell and the positioning neighbor cells form a positioning zone for the target UE. The serving BS first allocates radio resource to the target UE for network-based positioning. The target UE then transmits a positioning reference signal (PRS) to the serving BS and all the cooperative BSs via the allocated radio resource at the same time instant. The cooperative BSs then conduct PRS detection and TOA measurements and report the TOA measurement results to the serving BS. Finally, the serving BS conducts positioning estimation based on the TOA measurement results. In one novel aspect, only one PRS transmission is required in one positioning opportunity for one positioning result. Multiple positioning opportunities may be used to improve positioning accuracy.

In an explicit positioning scheme, the serving BS lets the target UE know that the PRS transmission is for positioning purpose. Either existing well-designed signals such as non-synchronized ranging, synchronized ranging, sounding, demodulation, random access channel or other positioning-specific signals are utilized for TOA measurements. On the other hand, in an implicit positioning scheme, the serving BS does not reveal to the target UE that the PRS transmission is for positioning purpose. The serving BS just utilizes the allocation message of existing reference signals such as non-synchronized ranging, synchronized ranging, sounding, demodulation, and random access channel for TOA measurements.

Candidates of PRS are selected with respect to different scenarios and allocated in a PRS resource region. Multiple positioning opportunities may be multiplexed over time, frequency or code domain in the PRS resource region. In addition, each PRS is composed of one or multiple basic units in the PRS resource region, and each basic unit carries one reference signal. Multiple basic units may also be multiplexed over time, frequency or code domain in the PRS resource region. For example, the multiplexed positioning opportunities or basic units may be arranged in contiguous or distributed physical radio resources along time or frequency domain.

In a dedicated positioning scheme, a dedicated radio resource is reserved in all cooperative BSs that participate in the network-based positioning for a target UE. On the other hand, in a non-dedicated positioning scheme, no inter-BS coordination for dedicated radio resource is required. Thus, the non-dedicated radio resource for PRS transmission may suffer from both intra-cell and inter-cell interferences, and result in degraded positioning accuracy. In one embodiment, the PRS is configured in such a way that both radio resource consumption and interference is minimized.

Other embodiments and advantages are described in the detailed description below. This summary does not purport to define the invention. The invention is defined by the claims.

### BRIEF DESCRIPTION OF DRAWINGS

The accompanying drawings, where like numerals indicate like components, illustrate embodiments of the invention.
Figure 1 (Prior Art) is a diagram that illustrates network-based positioning method adopted in an IEEE 802.16e wireless communication system.
Figure 2 is a diagram of a cellular OFDM/OFDMA system in accordance with one novel aspect.
Figure 3 is a diagram that illustrates a network-based positioning method in accordance with one novel aspect.
Figure 4 is a simplified block diagram of a user equipment (UE), a serving base station, and a neighbor base station in Figure 3.
Figure 5 is a diagram of a positioning zone defined in a novel network-based positioning service in a cellular OFDM/OFDMA system.
Figure 6 is a sequence chart of a network-based positioning procedure in accordance with one novel aspect.
Figure 7 illustrates examples of positioning reference signal design using a non-synchronous ranging channel in a wireless network.
Figure 8 illustrates examples of positioning reference signal design using sounding channel in a wireless network.
Figure 9 is a diagram of a positioning zone defined in a novel network-based positioning service with interference reduction.

### DETAILED DESCRIPTION OF THE INVENTION

Reference will now be made in detail to some embodiments of the invention, examples of which are illustrated in the accompanying drawings.

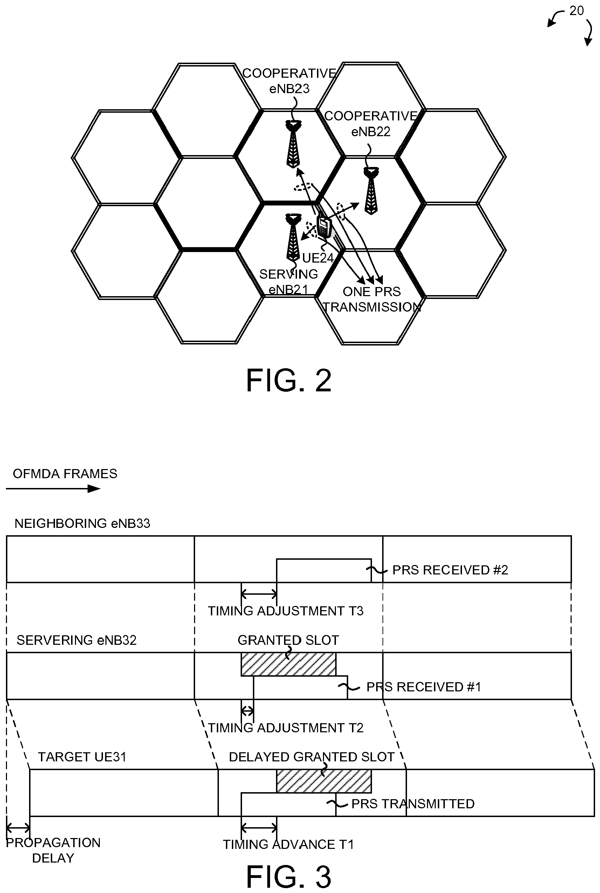

Figure 2 is a diagram of a cellular OFDM/OFDMA system 20 in accordance with one novel aspect. Cellular OFDM/OFDMA system 20 comprises a plurality of base stations including a serving base station (i.e., also referred to as eNB in 3GPP LTE systems) 21 that serves a mobile station (user equipment UE) 24, a first cooperative base station eNB22, and a second cooperative base station eNB23. To calculate the geographic location of target UE24, a network-based positioning service may be initiated either by the network or by target UE24 itself. For network-based positioning, serving eNB21 typically performs positioning calculation of target UE24 based on certain measurements. For example, serving eNB21 may estimate the location information of target UE24 by estimating the time of arrival (TOA) of a reference signal by measuring the reference signal transmitted by target UE24. The measurements can be done either by the target UE (referred as US-assisted), or by the network (referred as network-assisted). In one embodiment, eNB21 first chooses eNB22 and eNB23 as its cooperative eNBs, and then allocates radio resource to UE24 for uplink positioning reference signal (PRS) transmission. UE24 transmits the PRS to all eNBs over the allocated radio resource one time. All eNBs then conduct PRS detection and TOA measurements of the PRS. Finally, the serving eNB conducts positioning estimation using the collected TOA measurement results. Alternatively, the serving eNB conducts positioning estimation using the time difference of arrival (TDOA) of the reference signal, which is computed based on the TOA measurement results. In one novel aspect, only one PRS transmission, instead of sequential multiple reference signal transmissions as illustrated in Figure 1, is required for one TDOA/TOA positioning result.

Figure 3 is a diagram that illustrates a network-based positioning method in accordance with one novel aspect. In the example of Figure 3, the shaded region (e.g., GRANTED SLOT) is the time duration that a serving eNB32 expects to receive a positioning reference signal (PRS) from a target UE31. Based on the expected time duration (e.g., delayed granted slot), target UE31 then transmits the PRS (e.g., PRS transmitted) to both serving eNB32 and neighboring eNB33 simultaneously. The PRS is transmitted by target UE31 with a timing advance T1, which is the estimated propagation delay between target UE31 and its serving eNB32. When the transmitted PRS is received by eNB32 and eNB33 (e.g., PRS received #1 and #2), both eNBs detect the received PRS and measure corresponding TOA of the detected PRS. As depicted in Figure 3, the PRS received #1 has a timing adjustment T2 with respect to the granted slot, due to the estimation error of timing advance T1. Typically, because target UE31 has already performed uplink timing synchronization with its serving eNB32, the timing adjustment T2 is relatively small. On the other hand, because neighboring eNB33 is further away from the target UE31 than serving eNB32, the resulting timing adjustment T3 is relatively big.

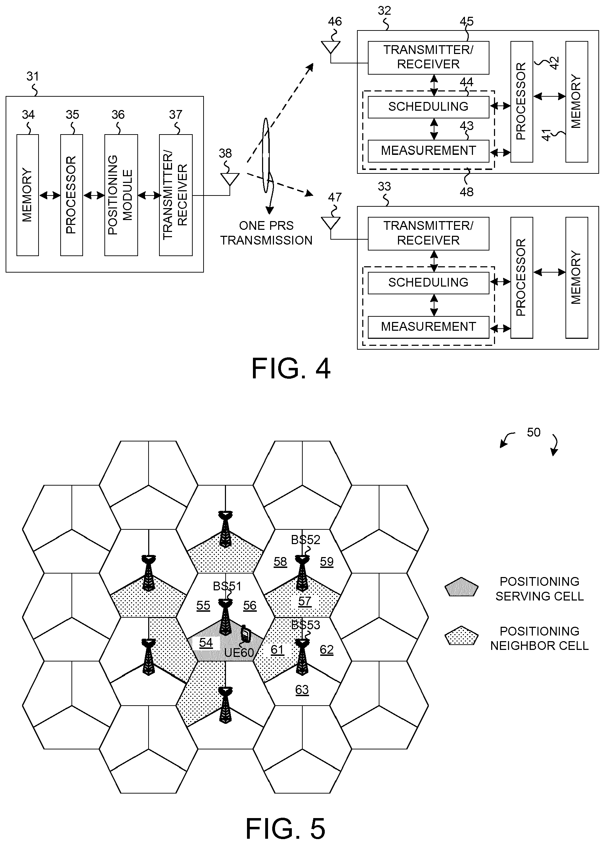

Figure 4 is a simplified block diagram of target UE31, serving eNB32, and neighboring eNB33 illustrated in Figure 3. UE31 comprises memory 34, a processor 35, a positioning module 36, and a transmitter/receiver 37 coupled to an antenna 38. Similarly, each base station (e.g., serving eNB32) comprises memory 41, a processor 42, a positioning module 48 comprising a measurement entity 43 and a scheduling entity 44, and a transmitter/receiver 45 coupled to an antenna 46. Positioning module 48 handles positioning related tasks such as allocating radio resource for PRS transmission, detecting and measuring the PRS, and estimating positioning result.

Figure 5 is a diagram of a positioning zone defined in a novel network-based positioning service in a cellular OFDM/OFDMA system 50. Cellular OFDM/OFDMA system 50 comprises a plurality of base stations including BS51-BS53. Each base station uses multiple antennas to serve multiple cells. For example, BS51 serves cells 54-56, BS52 serves cells 57-59, and BS53 serves cells 61-63. In the example of Figure 5, a target UE60 is located in cell 54, which is referred to as the positioning serving cell denoted by a dark-shaded area. BS51, as the serving base station of UE60, determines a set of positioning neighbor cells surrounding the positioning serving cell 54. The positioning neighbor cells, each denoted by a dotted-shaded area, are cells that participate in the positioning of target UE60. The base stations that serve the positioning neighbor cells are also referred to as the cooperative base stations. The antenna of a cooperative base station that serves a positioning neighbor cell always directs to the positioning serving cell. The union of the positioning serving cell and the positioning neighbor cells forms a positioning zone for the network-based positioning of target UE60.

It is desirable that a network-based positioning mechanism for a target UE is designed to reduce system overhead as well as to improve positioning accuracy. To achieve this goal, a network-based positioning procedure is proposed to use one PRS transmission for each TDOA/TOA positioning result to save system bandwidth. Interference management is then applied to PRS transmissions in a positioning zone of the target UE to reduce interference level and to improve positioning accuracy. In addition, appropriate reference signals are adopted as PRS, and the PRS is configured in such a way to consume minimum radio resource and to reduce interference level. Different embodiments and examples are now described below with more details.

### Network-based Positioning Procedure

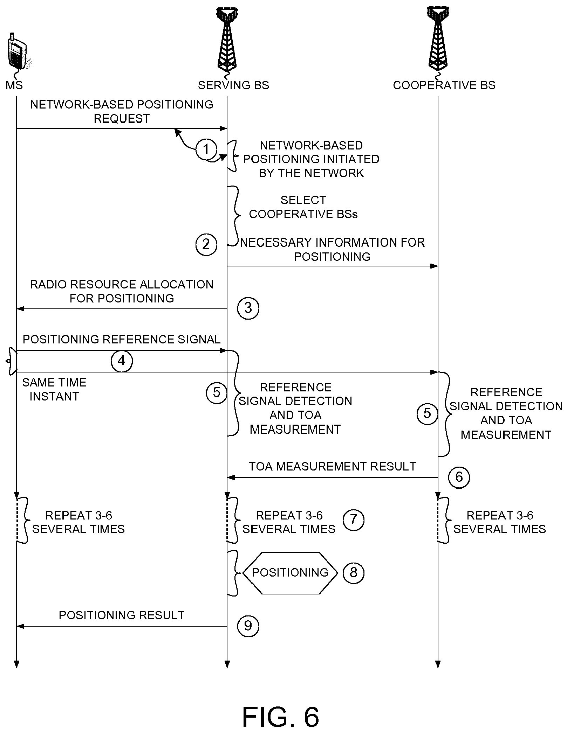

Figure 6 is a detailed sequence chart of a network-based positioning procedure in accordance with one novel aspect. Two different positioning schemes are illustrated in Figure 6. In an explicit positioning scheme, both cooperative BSs and a target UE explicitly know the actual purpose of the reference signal transmission. Either existing well-designed signals such as non-synchronized ranging, synchronized ranging, sounding, demodulation, random access channel or other positioning-specific signals are utilized for TOA measurements. On the other hand, in an implicit positioning scheme, no additional reference signal transmission is required. While the cooperative BSs explicitly know the actual purpose of the reference signal transmission, the target UE does not know the actual purpose of the reference signal transmission. Existing reference signals such as initial/handover ranging, periodic ranging, and sounding signals are utilized for TOA measurement.

In step ○,1 of Figure 6, a network-based positioning procedure is initiated either by a target UE (MS), or by a serving eNB (BS). For UE initiated positioning (applicable for explicit scheme only), the target MS transmits a network-based positioning request to its serving BS. For network initiated positioning (applicable for both explicit and implicit schemes), the serving BS simply starts the positioning procedure. In step ○,2, the serving BS chooses part of the neighboring BSs as its cooperative BSs and sends a message through backbone to all cooperative BSs for network-based positioning. The message contains necessary information of the location-based service (LBS) such as time/frequency location and code sequence set of the reference signal etc. In step ○,3, the serving BS allocates radio resource to the MS for uplink reference signal transmission. In step ○,4, the MS transmits an uplink reference signal to all cooperative BSs at the same time instant via the allocation radio resource. In step ○,5, the serving BS and the cooperative BSs conduct reference signal detection and TOA measurement for network-based positioning. In step ○,6, the cooperative BSs report TOA measurement results and other necessary messages to the serving BS. The necessary messages may consist of detection success or failure and/or other information. In step ○,7, the above illustrated steps ○,3∼○,6 may be repeated several times to further improve the positioning performance. One PRS transmission and TOA measurement is referred as one positioning opportunity. In general, multiple positioning opportunities can be used to average out interference and improve positioning accuracy. In step ○,8, the serving BS conducts TDOA and positioning estimation based on the collected TOA measurement results. Finally, in step ○,9, the serving BS feedbacks the positioning result to the target UE (i.e., applicable for explicit scheme only), especially for UE initiated positioning. The whole positioning procedure should be completed within 30 seconds to meet the E-911 requirements.

In an explicit positioning scheme, the serving BS lets the MS know that the transmission is for positioning purpose. In step ○,3 of Figure 6, the serving BS transmits a radio resource allocation message to the MS. The message may contain information of the radio resource units allocated for network-based positioning such as the number of positioning opportunities and the time-frequency location of the allocated radio resource. The message may also contain information of the reference signal used for network-based positioning such as the ID of the target UE, the initial code sequence index used for reference signal transmission, the number of reference signal transmissions over time in one network-based positioning, and the time interval between two consecutive reference signal transmissions.

In an implicit positioning scheme, however, the serving BS does not reveal to the MS that the transmission is for positioning purpose. The serving BS just utilizes the allocation message of existing reference signals for uplink TOA measurement in step ○,3 of Figure 6. Under the implicit scheme, therefore, the radio resource for the reference signal transmission may suffer intra-cell and inter-cell interference because two or more UEs may use the same radio resource for the reference signal transmission. In an implicit positioning scheme, a sounding reference signal (SRS) is often used as a PRS. The triggering of a positioning SRS can be executed in several ways. First, the SRS can be triggered by one bit in downlink control information (DCI) (e.g., DCI format 0 or 1A or other DCI formats). All parameters for the SRS resources are indicated by higher layer. Second, the SRS can be triggered by on bit in DCI format 3/3A (group indication), i.e., a part of transmit power control (TPC) fields in DCI format 3/3A is redefined for positioning SRS trigger bits. Third, the SRS can be triggered together with positioning SRS resource indication. The payload size is aligned with DCI format 0. The number of the positioning SRS per trigger can also be defined in different ways. In one example, a predetermined number of SRS transmissions per trigger may be defined. The predetermined number may be one to utilize SRS resources more efficiently. In another example, the SRS transmission is semi-persistent until disabled.

### PRS Design and Transmission

In network-based positioning, a positioning reference signal (PRS) is transmitted via allocated radio resource referred as the PRS resource region. Inside the PRS resource region, either an existing or a newly designed reference signal is mapped onto one basic unit. For one network-based positioning opportunity, one PRS is composed of one or multiple basic units in the PRS resource region. Multiple basic units may be multiplexed over the frequency, time, or code domain in the PRS resource region. In a first example, multiple basic units are arranged in contiguous physical radio resource over the time or frequency domain. In a second example, multiple base units are arranged in distributed physical radio resource over the time or frequency domain. In a third example, multiple basic units are multiplexed in physical radio resource over the code domain.

In network-based positioning, multiple positioning opportunities may be used by multiple UEs via multiple PRSs in the PRS resource region. Similar to multiple basic units, the multiple positioning opportunities may also be multiplexed over the frequency, time, or code domain in the PRS resource region. In one example, one target UE utilizes multiple positioning opportunities to improve network-based positioning accuracy, but the multiple positioning opportunities have to be multiplexed over the time and/or the frequency domain. In another example, multiple UEs may conduct network-based positioning at the same time instance. Different UEs utilize different positioning opportunities multiplexed over the frequency and/or the code domain.

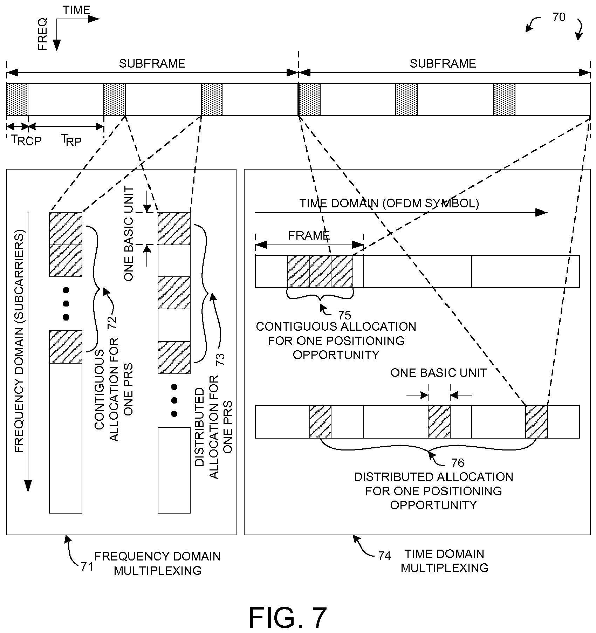

Figure 7 illustrates examples of positioning reference signal design using a non-synchronous ranging channel in a wireless network 70. The horizontal axis represents OFDM symbols along the time domain, while the vertical axis represents subcarriers along the frequency domain. Two sub frames are depicted in the top part of Figure 7. Each subframe has a ranging cyclic prefix (RCP) length T_{RCP}, and a ranging signal waveform length T_{RP}. As illustrated in Figure 7, a non-synchronous ranging channel spans over a two-dimensional radio resource region as one basic unit. Each basic unit occupies a plurality of OFDM symbols and a plurality of subcarriers. Within the radio resource region, a long ranging code sequence is partitioned into multiple portions and each portion is mapped onto an OFDM symbol. For frequency domain multiplexing 71 as depicted on the left side of Figure 7, multiple basic units are multiplexed over frequency domain with either contiguous allocation 72 or distributed allocation 73 for one UE positioning opportunity (i.e., for one PRS). Similarly, for time domain multiplexing 74 as depicted on the right side of Figure 7, multiple basic units are multiplexed over time domain with either contiguous allocation 75 or distributed allocation 76 for one UE positioning opportunity (i.e., for one PRS).

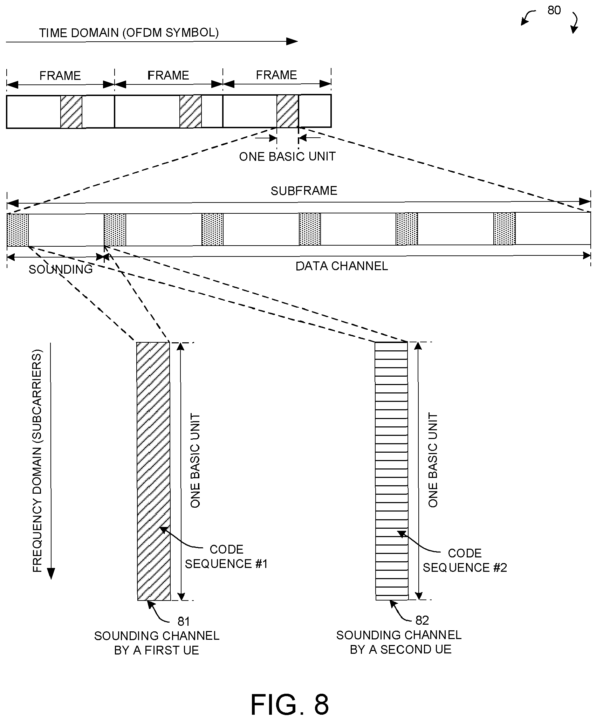

Figure 8 illustrates examples of positioning reference signal design using sounding channel in a wireless network 80. The horizontal axis represents OFDM symbols along the time domain, while the vertical axis represents subcarriers along the frequency domain. Three frames are depicted in the top part of Figure 8. Each frame has a number of subframes, and one of the subframes in each frame contains a sounding channel and a data channel. As illustrated in Figure 8, the sounding channel spans over a two-dimensional radio resource region as one basic unit. Each basic unit occupies the first OFDM symbol in the sub frame along the time domain and the entire subcarriers along the frequency domain. Within the radio resource region, a sounding code sequence is mapped onto the OFDM symbol. If two UEs are utilizing the same time-frequency region for sounding channel, then two basic units are multiplexed over code domain. For example, a first UE may use a first sounding channel 81 with code sequence #1, while a second UE may use a second sounding channel 82 with code sequence #2 to avoid code sequence collision.

For network-assisted network-based positioning, PRS candidates include signals transmitted by a UE, and some parameters of the transmitted signals are known to the PRS measurement entity either in advance or by means of estimation. In a first example, a PRS is selected to be the signal for measuring the distance between a UE and an eNB, such as a physical random access channel (PRACH) in a 3GPP LTE system, or a synchronized/non-synchronized ranging channel in IEEE 802.16m. In a second example, a PRS is selected to be the signal that enables uplink channel estimation by the eNB, such as an SRS or a demodulation reference signal (DM-RS) in LTE, or a sounding channel in IEEE 802.16m. For DM-RS of LTE, both the DM-RS in physical uplink control channel (PUCCH) and physical uplink shared channel (PUSCH) can be used as a PRS. In a third example, a PRS is selected to be semi-persistent scheduled (SPS) data signals where the received SPS data signal at the positioning serving eNB is passed to the channel decoder and then is encoded again. The reconstructed signal is sent via X2 to positioning neighbor cells. Thus, when the channel condition is not too hostile, the transmitted SPS data signal can be seen as known to the positioning serving eNB and the positioning neighbor eNBs.

From the above-illustrated PRS candidates, a PRS can be determined based on specific network scenarios. For example, if a target UE is sending SRS or SPS data, then the SRS or SPS data can be used as the PRS. If a target UE is scheduled dynamically but it does not send SRS, then the DM-RS in the PUSCH of the target UE can be adopted as the PRS. In order to do that, the measurement entity of an eNB should be able to obtain scheduling information of the target UE. Alternatively, the DM-RS in the PUCCH of the target UE can be used as the PRS. The time/frequency location of the PUCCH can be calculated from parameters configured by higher layers. If a target UE is scheduled dynamically and it sends SRS regularly, then the SRS can also be adopted as the PRS, in addition to the DM-RS in the PUSCH or PUCCH of the target UE.

For UE-assisted network-based positioning, PRS candidates include signals of the global navigation satellite system (GNSS) and Rel-8/9 DL positioning reference signal defined in a 3GPP LTE system. The GNSS includes GPS and its modernization, Galileo, GLONASS, Satellite Based Augmentation Systems (including WAAS, EGNOS, MSAS, and GAGAN), and Quasi-Zenith Satellite System. The GNSS can be used individually or in combination with other signals.

### Interference Management and Reduction

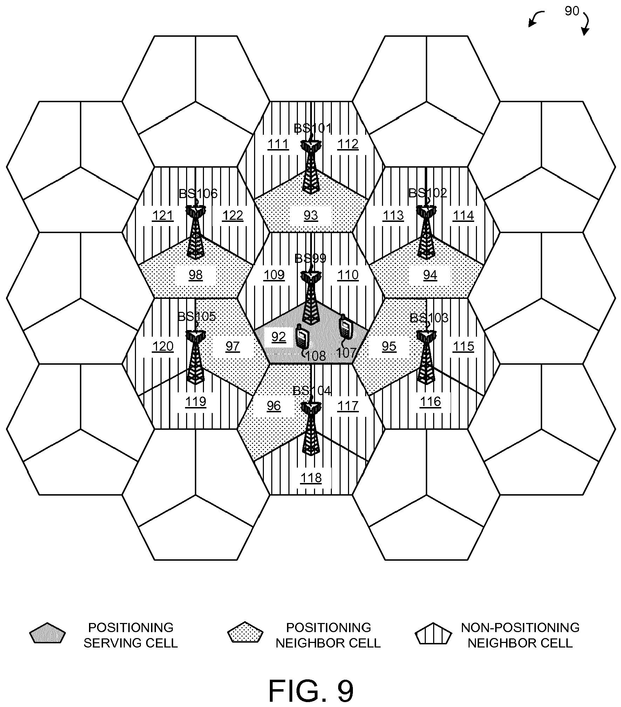

Figure 9 is a diagram of a positioning zone 91 defined in a novel network-based positioning service in a wireless network 90. Positioning zone 91 comprises a positioning serving cell 92 (in dark-shaded area) served by serving BS99, and a plurality of positioning neighbor cells 93-98 (in dot-shaded area) served by cooperative BSs 101-106 respectively. During network-based positioning, for each PRS transmission to one base station, the base station may suffer interference from its neighboring cells while receiving the PRS for TOA measurements. For example, while serving BS99 receives the PRS transmission from target UE107, it may suffer interference from data transmission by UEs in the neighboring cells. Similarly, each cooperative base station may also suffer interference from data transmission by UEs in the serving cell and other neighboring cells. Such inter-cell interference thus degrades the quality of TOA measurements and the accuracy of positioning results.

Two different schemes are proposed in network-based positioning for different positioning performance. In a dedicated scheme, a dedicated radio resource is reserved in all cooperative eNBs that participate in the network-based positioning for a target UE. The dedicated radio resource is located in the same time-frequency location for all cooperative eNBs. Within positioning zone 91, no other UEs use the same radio resource as the target UE. Thus, the dedicated radio resource for PRS transmission does not suffer interference and results in good positioning accuracy. In a non-dedicated scheme, no inter-eNB coordination for dedicated radio resource is required. Within positioning zone 91, some UEs use the same radio resource as the target UE. Thus, the non-dedicated radio resource for PRS transmission may suffer from both intra-cell and inter-cell interferences, and result in degraded positioning accuracy.

Therefore, for non-dedicated scheme, positioning accuracy is proportional to the effectiveness of interference reduction (IR). In one novel aspect, the TOA measurement quality of PRS for non-dedicated scheme is improved by performing IR in positioning neighbor cells. Suppose target UE107 is transmitting a PRS at the k^{th} OFDM symbol, and the PRS occupies a set of subcarriers indexed by S = {s₀, s₁, ... , s_{N-1}}. The code sequence corresponding to the PRS is denoted as (a₀, a₁, ... , a_{N-1}). In each of the positioning neighbor cells, if a second sequence is composed by the subcarriers in the set S in the k^{th} OFDM symbol, then the second sequence should be as orthogonal as possible to the PRS code sequence (a₀, a₁, ... , a_{N-1}) such that both radio resource consumption and inter-cell interference is minimized. In one specific embodiment, for a positioning neighbor cell, muting all subcarriers in the set S in the k^{th} OFDM symbol is one special way of making all the sequences orthogonal to (a₀, a₁, ... , a_{N-1}). By muting the subcarriers, a non-dedicated scheme falls back to a dedicated scheme.

Referring back to Figure 9, there are certain number of cells that are located very close to the positioning serving cell, but do not belong to positioning zone 91. Those cells (e.g., cells 109-122), denoted by dash-shaded area, are referred to as non-positioning neighboring cells. Although the non-positioning neighboring cells do not participate in the positioning, they may cause significant inter-cell interference to the PRS transmission because they are physically proximal to the positioning serving cell. In one novel aspect, all subcarriers in the set S in the K^{th} OFDM symbol are muted in all non-positioning neighboring cells to further reduce inter-cell interference and improve positioning accuracy.

In a 3GPP LTE system, an SRS may be adopted as a PRS. Suppose that the code sequence of a PRS is denoted as (a₀, a₁, ... , a_{N-1}) transmitted by subcarriers S = {s₀, s₁, ... , s_{N-1}} in k^{th} OFDM symbol. Typically, the sequence A = (a₀, a₁, ... , a_{N-1}) of an SRS is a cyclically-shifted version of a base sequence r_{u,v}(n), n = 0, 1, ..., N-1, where 0 <= u <= 29 is the group number, and v is the base sequence number within the group. A base sequence in turn is a cyclic extension of a prime-length Zadoff-Chu sequence. In LTE systems, the group number u in slot ns is defined by a group hopping pattern f_{gh}(nₛ) and a sequence-shift pattern fₛₛ according to u = (f_{gh}(nₛ) + fₛₛ) mod 30, where f_{gh}(nₛ) and fₛₛ are cell specific. In the example of Figure 9, UE017 and UE108 are both located in the same cell 92. Both UEs are performing positioning concurrently using the same time-frequency radio resources in order to have efficient positioning resource consumption. UE107 uses a first PRS having a first code sequence A1, while UE108 uses a second PRS having a second code sequence A2. Since both f_{gh}(nₛ) and fₛₛ are cell specific, UE107 and UE108 have the same group number u all the time, their PRS code sequences A1 and A2 thus have the same base sequence for positioning. The two PRSs code sequences A1 and A2 differ only in their cyclic shifts when group hopping is enabled or sequence hopping is disabled. Even if group hopping is disabled and sequence hopping is enabled, the base sequences of Al and A2 are substantially the same.

The cyclic shift in the PRS code sequences (in the frequency domain), however, is equivalent to the time delay of the Fourier-transformed PRS (in the time domain). Since the TOA measurement is based on the estimation of the time delay of the PRS, two PRSs differing only in the cyclic shift thus cannot be used to estimate TOAs of two different target UEs. In one novel aspect, either f_{gh}(nₛ), or fₛₛ, or both f_{gh}(nₛ) and fₛₛ are set to be UE specific parameters, instead of cell specific parameters. For example, fₛₛ = ((cell_ID) mod 30 + Δss) mod 30, where 0 <= Δss <= 29 is UE specific and is configured by higher layers. When UE107 and UE108 of the same cell are performing positioning concurrently using the same time-frequency resources, their values of Δss are different, resulting in different fₛₛ values, different group numbers, different base sequences and different PRSs for reliable TOA measurement.

Although the present invention has been described in connection with certain specific embodiments for instructional purposes, the present invention is not limited thereto. For example, although cellular OFDM/OFDMA networks are illustrated in some of the Figures, other types of wireless communication network are also applicable. Accordingly, various modifications, adaptations, and combinations of various features of the described embodiments can be practiced without departing from the scope of the invention as set forth in the claims.

### Further aspects of the invention are

A method comprising:
receiving allocated radio resource information by a target user equipment (UE) for network-based positioning in a wireless communication system; and
transmitting a positioning reference signal to a positioning serving cell via the allocated radio resource, wherein the positioning reference signal is also transmitted to one or more positioning neighbor cells at the same time instant, and wherein the positioning serving cell and the positioning neighbor cells form a positioning zone.

The method preferably wherein the allocated radio resource is located in the same time-frequency resource region and reserved for the target UE for all cells in the positioning zone.

The method preferably wherein the allocated radio resource is located in the same time-frequency resource region for all cells in the positioning zone, and wherein the allocated radio resource is used by another UE in the positioning zone.

The method preferably wherein a data sequence transmitted by the other UE via the allocated radio resource is orthogonal to the data sequence of the positioning reference signal.

The method preferably wherein the same time-frequency resource region is not allocated for data transmission for a number of non-positioning neighbor cells that are in physical proximity with the positioning serving cell.

The method preferably wherein a specific reference signal is explicitly transmitted as the positioning reference signal by the target UE.

The method preferably wherein an existing reference signal is implicitly transmitted as the positioning reference signal by the target UE.

The method preferably wherein the existing reference signal is taken from the group consisting of: a physical random access channel, a ranging channel, a sounding reference signal, a demodulation reference signal, and a semi-persistent scheduling data signal.

The method preferably wherein the target UE transmits the positioning reference signal for a predefined number of times such that positioning precision is increased.

The method preferably further comprising:
transmitting a positioning request to the positioning serving base station; and
receiving positioning result from the positioning serving base station.

A further aspect is a method comprising:
transmitting positioning information from a serving base station (BS) to one or more cooperative BSs located in a positioning zone of a target user equipment (UE) in a wireless communication system;
allocating radio resource for network-based positioning of the target UE, wherein the allocated radio resource is used for a positioning reference signal transmission to the serving BS and to the cooperative BSs at the same time instant;
receiving the positioning reference signal and thereby performing positioning measurement; and
estimating positioning result based on positioning measurement results from the serving BS and the cooperative BSs.

The method preferably wherein the allocated radio resource is located in the same time-frequency resource region and reserved for the target UE for all BSs in the positioning zone.

The method preferably wherein the allocated radio resource is located in the same time-frequency resource region for all BSs in the positioning zone, and wherein the allocated radio resource is used by another UE in the positioning zone.

The method preferably wherein a data sequence transmitted by the other UE via the allocated radio resource is orthogonal to the data sequence of the positioning reference signal.

The method preferably wherein the same time-frequency resource region is not allocated for data transmission for a number of non-cooperative BSs that are in physical proximity with the serving BS.

The method preferably wherein the serving BS explicitly informs the target UE that the positioning reference signal is used for network-based positioning.

The method preferably wherein the serving BS does not inform the target UE that the positioning reference signal is implicitly used for network-based positioning.

## Claims

1. A method comprising:
allocating a positioning reference signal (PRS) resource region by a serving base station (BS) for network-based positioning in a wireless communication system, wherein the PRS resource region contains radio resource allocated for one or multiple positioning opportunities; and
receiving one or multiple PRSs from one or multiple target user equipments (UEs) via the allocated PRS resource region, wherein each PRS is used for one positioning opportunity.

2. The method of Claim 1, wherein the multiple positioning opportunities are multiplexed over frequency, time, or code domain in the PRS resource region.

3. The method of Claim 1, wherein each PRS is composed of one or multiple basic units in the PRS resource region, and wherein each basic unit carries one reference signal.

4. The method of Claim 3, wherein the multiple basic units are multiplexed over frequency, time, or code domain.

5. The method of Claim 1, wherein the multiple positioning opportunities are used by the same target UE to improve positioning precision, and wherein the utilized multiple positioning opportunities are multiplexed over frequency or time domain.

6. The method of Claim 1, wherein a first positioning opportunity is used by a first target UE, wherein a second positioning opportunity is used by a second target UE at the same time instant, and wherein the first and the second positioning opportunities are multiplexed over frequency or code domain.

7. The method of Claim 1, wherein one of the PRSs is a reference signal originally defined for non-positioning purposes.

8. The method of Claim 7, wherein one of the PRSs is taken from the group consisting of: a physical random access channel, a ranging channel, a sounding reference signal, a demodulation reference signal, and a semi-persistent scheduling data signal.

9. The method of Claim 1, wherein the same time-frequency resource in the PRS resource region is used by two target UEs located in the same cell, and wherein different sounding code sequences are used by the two target UEs for transmitting positioning sounding reference signals.
